# EUROPÄISCHE PATENTSCHRIFT

(11) **EP 2 142 002 B1**
(45) Veröffentlichungstag und Bekanntmachung des Hinweises auf die Patenterteilung: **16.07.2014**
(21) Anmeldenummer: 08736628.2
(22) Anmeldetag: 29.04.2008
(51) Int. Cl.: A22B 5/00

(54) **VERFAHREN ZUM BEARBEITEN EINES SCHLACHTTIERES**
METHOD FOR PROCESSING AN ANIMAL TO BE SLAUGHTERED
PROCÉDÉ DE TRAITEMENT D'UN ANIMAL ABATTU

(30) Priorität: 03.05.2007 DE 102007021094
(43) Veröffentlichungstag der Anmeldung: 13.01.2010
(73) Patentinhaber: Banss Schlacht- und Fördertechnik GmbH, 35216 Biedenkopf (DE)
(72) Erfinder: SCHMIDT, Frank, 35232 Dautphetal (DE); STARK, Marek, 35083 Wetter (DE)
(74) Vertreter: Stoffregen, Hans-Herbert
(86) Internationale Anmeldenummer: PCT/EP2008/055238
(87) Internationale Veröffentlichungsnummer: WO 2008/135456

(56) Entgegenhaltungen:
- EP-A- 0 594 791
- AU-B2- 573 603
- DE-B3-102004 022 346
- US-B1- 6 623 348

## Beschreibung

Die Erfindung bezieht sich auf ein Verfahren zum Öffnen von Bauchdecke und Brustbein eines in einer Bearbeitungsstation befindlichen Schlachttieres, wie Schwein, das in die Bearbeitungsstation an seinen Hinterbeinen hängend entlang einer Förderbahn transportiert wird, wobei zum Öffnen des Schlachttieres dieses zuvor gescannt und hierdurch ermittelte digitalisierte Scanndaten einer Steuerung einer Handhabungseinrichtung zugeführt werden, die das Öffnen mittels eines Schneidwerkzeuges umfassend ein um eine Drehachse rotierendes Schneidmesser mit zugeordnetem Abweiser durchführt, wobei das Schlachttier während des Öffnens an einer Abstützung in der Bearbeitungsstation zumindest zeitweise mittels eines mit dem Schneidwerkzeug mitbewegten Druckelements gedrückt und durch dieses die Vorderbeine ggfs. auseinandergespreizt werden und wobei das Öffnen folgende Schritte umfasst,
- Einführen des Abweisers in eine im Bauchbereich im Bereich der Hinterbeine des Schlachttieres vorhandene Öffnung,
- Positionieren des Abweisers auf der Innenseite der Bauchdecke und
- Durchtrennen der Bauchdecke sowie des Brustbeins bei vertikaler abwärts gerichteter Bewegung des Schneidwerkzeugs.

In der DE-Z.: Fleischwirtschaft 8/2005, Seiten 25 bis 28, Schmidt, F.: "Roboter toppen Spezialmaschinen" wird ein Schlachten von Tieren unter Einsatz von Robotern beschrieben. Dabei werden Schlachtschweine am Anfang einer Roboterlinie durch eine Messstation geführt, in der durch einen oder mehrere Laserscanner ein Oberflächenprofil des Schlachttierkörpers digitalisiert wird. Mittels eines Roboters (Handhabungseinrichtung) können sodann auf der Basis der digitalisierten Werte Vorderpfoten abgekniffen, Rektum freigeschnitten, Schlossknochen getrennt und Bauchdecke und Brustbein geöffnet werden. Die einzelnen Bearbeitungen erfolgen dabei in getrennten Bearbeirungsstationen. Während der einzelnen Bearbeitungsschritte wird das Schlachttier gefördert, so dass im kontinuierlichen Betrieb, d. h. das vom Roboter geführte Werkzeug fährt synchron zur Transportbewegung des Schlachttierförderers mit, die Arbeiten an dem Schlachttier durchgeführt werden.

Aus der EP-B-0 594 791 sind ein Verfahren sowie eine Vorrichtung zum Aufschneiden eines Tierkörpers bekannt. Beim Öffnen der Bauchdecke und des Brustbeines werden die Eingeweide von der Bauchwand ferngehalten. Hierzu weist ein Schneidwerkzeug einen relativ zu diesem positionierbaren Dorn auf.

Um beim Schlachten von an den Hinterbeinen aufgehängten Schweinen die Vorderbeine ordnungsgemäß zu positionieren, ist nach der EP-B-1 182 933 ein Positionierungsmittel mit einem im Wesentlichen festen Positionierungskörper vorgesehen, der zwischen die Vorderbeine des Schlachttieres getrieben wird.

Ein Schneidwerkzeug mit rotierendem Messer ist der DE-B-10 2004 022 346 zu entnehmen. Dabei wird das Schneidmesser von einer Schutzhaube umgeben, die zu dem Schneidmesser drehbar ist. In einer zurückgezogenen Stellung wird das Schneidmesser in das Schlachttier eingeschnitten, um sodann nach erfolgtem Einschnitt die Abdeckung in Richtung des Schlachttieres zu verstellen.

Aus der US-B-6 623 348 ist ein Verfahren zum Öffnen von Bauchdecke und Brustbein eines Schlachttieres bekannt, das an seinen Hinterbeinen hängend entlang einer Förderbahn transportiert wird, wobei zum Öffnen des Schlachttieres dieses zuvor gescannt und hierdurch ermittelte Scanndaten einer Steuerung einer Handhabungseinrichtung zugeführt werden.

Gegenstand der AU-B-573 603 ist ein Verfahren zum Öffnen eines Schlachttieres, das an seinen Vorderbeinen hängend einer Bearbeitungsstation zugeführt wird, in der Brustbein und Bauchdecke geöffnet werden. Damit beim Durchtrennen der Bauchdecke die Innereien nicht beschädigt werden, greift in das Innere des Schlachttieres ein Abweiser ein.

Der vorliegenden Erfindung liegt die Aufgabe zu Grunde, ein Verfahren zum Öffnen von Bauchdecke und Brustbein eines Schlachttieres der eingangs genannten Art so weiterzubilden, dass eine hochpräzise Bearbeitung bei hohem Durchsatz ermöglicht wird. Dabei soll sichergestellt sein, dass das gewünschte vertikale Durchtrennen von Bauchdecke und Brustbein mittig erfolgt, um wichtige Qualitätsmerkmale für die Wertschöpfung in einem industriellen fleischverarbeitenden Betrieb zu erfüllen.

Erfindungsgemäß wird die Aufgabe im Wesentlichen dadurch gelöst, dass ein Druckelement verwendet wird, das zwei zueinander verstellbare Bügelelemente aufweist, die derart gesteuert werden, dass das Druckelement beim Positionieren des Abweisers an der Innenseite der Bauchdecke zu dem Schlachttier beabstandet wird, dass das Druckelement anschließend an das Schlachttier angelegt und beim weiteren Öffnen auf der Bauchseite des Schlachttieres entlanggleitet, wobei die Bügelelemente in ihren den Vorderbeinen zugewandten ersten Enden minimal möglichen Abstand während des Eintauchens zwischen den Vorderbeinen aufweisen und anschließend in Abhängigkeit von der durch das Scannen erfassten Anatomie des Schlachttieres die Vorderbeine gespreizt werden, ohne dass eine Überdehnung erfolgt, und dass das Abheben des Druckelementes von dem Schlachttier dann erfolgt, nachdem das Brustbein über eine vorgegebene Länge durchtrennt ist.

Dabei erfolgt das Anlegen des Druckelementes an dem Schlachttier insbesondere in einem Abstand zwischen der Eintrittsöffnung und dem Beginn des Brustbeins, der in etwa ¼ bis ⅓, vorzugsweise ½ des Gesamtabstands zwischen Eintrittsöffnung und Beginn des Brustbeins ist.

Das Abheben des Druckelementes sollte dann erfolgen, wenn das Schneidwerkzeug in etwa ¼ bis ½, vorzugsweise ⅓ der Brustbeingesamtlänge durchtrennt hat.

Das Anlegen des Druckelementes erst nach Einbringen und Positionieren des Abweisers, der auch als Finger oder Dorn bezeichnet werden kann, stellt sicher, dass ein eindeutiges Positionieren an der Innenseite der Bauchdecke mit der Folge gegeben ist, dass beim weiteren Durchtrennen die Eingeweide ferngehalten, also nicht beschädigt werden können. Dem Abweiser steht aufgrund des zurückgezogenen Druckelementes genügend Freiraum zur Positionierung in der vorhandenen Öffnung zur Verfügung. Während der anschließenden Schneidbewegung in vertikaler Richtung abwärts durch die Bauchdecke wird sodann das Druckelement an das Schlachttier herangefahren und drückt dieses gegen die Abstützung, so dass eine eindeutige Ausrichtung des Schlachttieres zu der Bewegung des Schneidwerkzeuges sichergestellt ist.

Es wird folglich mit Fortschritt des Schnitts und in Abhängigkeit von der Anatomie des Schlachttiers das Druckelement von der Robotersteuerung in Richtung der Bauchdecke bis zu dessen Anliegen verfahren. Hierdurch ist sichergestellt, dass das Druckelement im erforderlichen Umfang zwischen die Vorderbeine des Schlachttieres einführbar und positionierbar ist, um folglich die Vorderbeine spreizen zu können; denn häufig liegen die Vorderbeine eng an dem Schlachttierkörper an bzw. befinden sich in gekreuzter Stellung.

Nachdem die ersten Enden der Bügelelemente mittig zwischen die Vorderbeine getaucht sind, werden die Bügelelemente mit ihren ersten Enden auseinander gefahren, um somit die Vorderbeine zu separieren und in eine definierte Stellung zu bringen. Dabei erfolgt durch die beim Scannen ermittelten anatomischen Daten des Schlachttieres ein Spreizen in einem Umfang, dass ein Überdehnen der Vorderbeine und somit eine zu Qualitätseinbußen führende Verletzung ausgeschlossen ist.

Die Verfahrensschritte sind folglich von anatomischen Merkmalen des Schlachttieres abhängig, die bei jedem Schlachttier neu ermittelt werden. Dabei erfolgt ein Spreizen und Zentrieren stets, bevor sich das Schneidwerkzeug an der oberen Spitze des Brustbeins befindet. Beim Durchtrennen des Brustbeines ist es dabei von besonderer Bedeutung, dass dies mittig erfolgt. Dies stellt das präzise in Abhängigkeit von der Anatomie des Schlachttieres erfolgte Auseinanderfahren der Bügelelemente des Druckelementes sicher. Diese exakte mittige Durchtrennung ist ein Qualitätsmerkmal und von der Bedeutung für die Wertschöpfung in einem industriellen fleischverarbeitenden Betrieb wesentlich.

Nachdem eine gewisse Länge des Brustbeins durchtrennt ist, wird das Druckelement zurückgefahren, also in die Ausgangsstellung verschwenkt, so dass dem Schneidwerkzeug größtmögliche Bearbeitungstiefe zur Verfügung steht. Dies ist notwendig, da das Brustbein zum Hals hin in Richtung Wirbelsäule verläuft.

Gleichzeitig werden die Bügelelemente mit ihren ersten Enden in ihren minimal möglichen Abstand verschwenkt, um auszuschließen, dass beim Verschwenken des Druckelementes ein unzulässiges Spreizen der Vorderbeine erfolgt.

Um das Spreizen zu ermöglichen, ist vorgesehen, dass die Bügelelemente des Druckelementes scherenförmig zueinander verschwenkbar und über eine in etwa im Mittenbereich verlaufende Schwenkachse verbunden werden. Dabei wird als Bügelelement insbesondere ein solches verwendet, das eine Z- bzw. S-förmige Geometrie mit Außen- und Mittelschenkeln aufweist, wobei die Mittelschenkel der Bügelelemente von der Schwenkachse durchsetzt werden.

Zum Verschwenken der Bügelelemente zueinander ist vorgesehen, dass der förderbahnseitig verlaufende Außenschenkel insbesondere in dessen freiem Endbereich mit einem Zylinder wie Druckluftzylinder verbunden wird, über den das Bügelelement entlang der Förderrichtung verschwenkbar ist. Ferner sind die Zylinder mit einem Basiselement verbunden, von dem die Halterung für das Schneidwerkzeug ausgeht.

Des Weiteren wird die von der Schwenkachse durchsetzte Verbindung der Bügelelemente mit einem weiteren Zylinder verbunden, der von dem Basiselement ausgeht und mittels dessen das Druckelement zu dem Basiselement verstellt werden kann, so dass infolgedessen die Bewegung in Richtung des Schlachttieres bzw. von diesem weg ermöglicht wird.

Die Eintrittsöffnung für den Abweiser und somit der Beginn des Durchtrennens von Bauchdecke wird in Weiterbildung der Erfindung durch Öffnen des Beckenknochens durch dasselbe Schneidwerkzeug gebildet.

Auch kann das Öffnen der Bauchdecke und des Brustbeins während des Förderns des Schlachttieres bei synchron mitbewegter Abstützung erfolgen, so dass ein hoher Durchsatz möglich ist. Gleichzeitig ist jedoch sichergestellt, dass eine präzise Ausrichtung des Schlachttieres zu dem Schneidwerkzeug vorliegt.

Die Abstützung des Schlachttieres kann auf sich entlang des Förderers erstreckenden umlaufenden Bändern erfolgen, so dass mit konstruktiv einfachen Maßnahmen eine Positionierung möglich ist. Ferner besteht die Möglichkeit, dass das Schneidwerkzeug um eine beabstandet zu der Drehachse verlaufende Achse verschwenkt werden kann, wodurch die erforderliche Bewegungsfreiheit insbesondere beim Durchtrennen des Beckenknochens gegeben ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden Ausführungsbeispielen.

Es zeigen:
- Fig. 1: eine Prinzipdarstellung einer Bearbeitungsstation,
- Fig. 2: die Bearbeitungsstation nach Fig. 1 in Draufsicht,
- Fig. 3: eine weitere Prinzipdarstellung einer Bearbeitungsstation,
- Fig. 4: eine Prinzipdarstellung eines Schneidwerkzeuges mit Druckelement in Vorderansicht,
- Fig. 5: die Anordnung gemäß Fig. 3 in Seitenansicht und
- Fig. 6: einen Schnitt entlang der Linie A-B in Fig. 4.

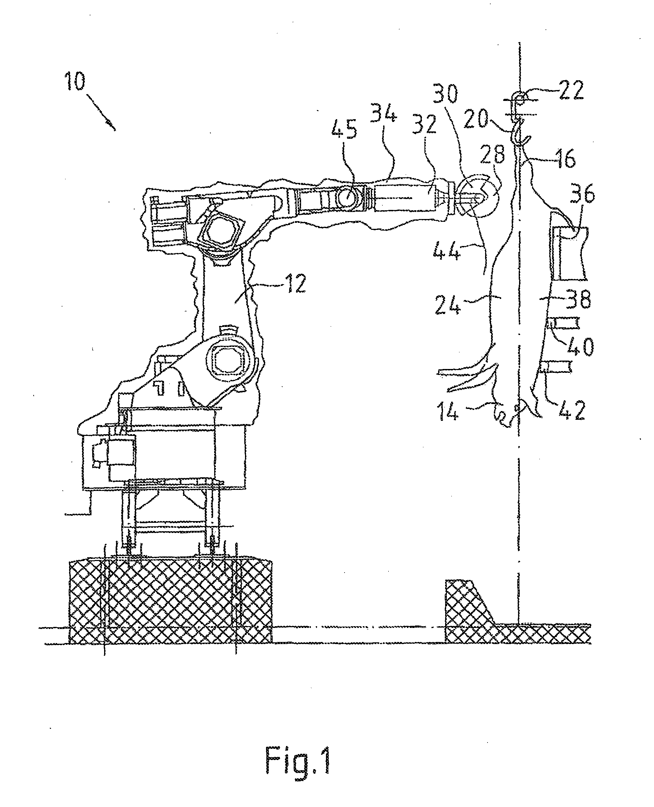

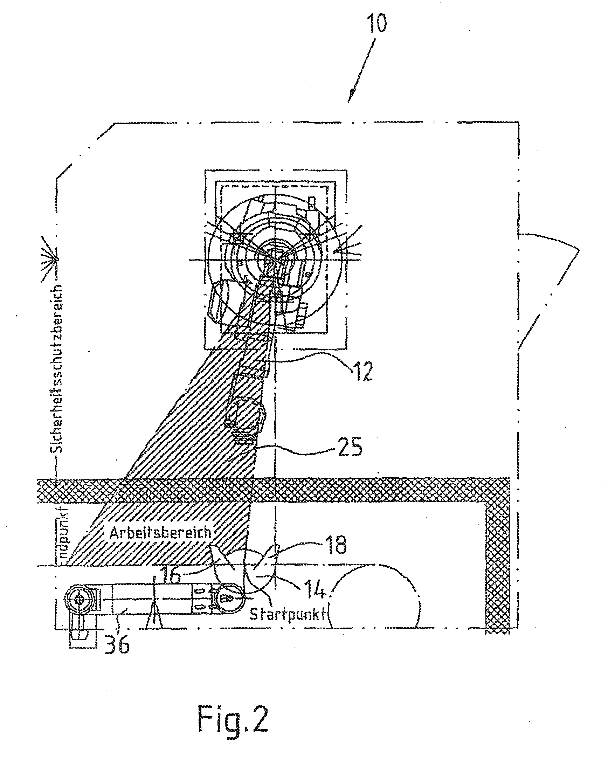

In den Fig. 1 und 2 ist rein prinzipiell eine Bearbeitungsstation 10 dargestellt, in der mittels eines Roboters 12 ein Schlachttier 14 bearbeitet wird. Hierbei handelt es sich beispielhaft um ein an seinen Hinterbeinen 16, 18 hängend transportiertes Schwein. Die Hinterbeine 16, 18 sind mit Haken 20 verbunden, die auf einer Rohrbahn 22 eines insbesondere Stetigförderers verschiebbar angeordnet sind. Andere Förderer kommen selbstverständlich auch in Frage. Insoweit wird auf bekannte Techniken in Schlachtstraßen verwiesen.

Das Schwein 14 ist mit seiner Bauchseite 24 dem Roboter 12 zugewandt, der über digitalisierte Scanndaten gesteuert wird, die durch Scannen des Schweins 14 gewonnen werden. Hierzu wird auf aus dem Stand der Technik bekannte Hard- und Software zurückgegriffen. Das Schwein 14 wird an einen oder mehreren Laserscannern vorbeigeführt, mit der zumindest die Bereiche des Schweins 14 gescannt werden, die bearbeitet werden sollen.

Erfindungsgemäß werden in der Bearbeitungsstation 10, und zwar in dem in Fig. 2 schraffierten Arbeitsbereich 25, zumindest Bauchdecke und Brustbein des Schweins 14, vorzugsweise auch Schlossknochen geöffnet. Dies erfolgt mittels eines Schneidwerkzeugs mit einem um eine Drehachse 26 rotierenden Schneidmesser 28 wie einer Säge. Das Schneidmesser 28 ist von einer Schutzhaube 30 umgeben, die um die Drehachse 26 verschwenkbar ist. Das Schneidmesser 28 mit der Schutzhaube 30 gehen von einem Arm 32 des Roboters 12 aus, um im gewünschten Umfang die Bearbeitung des Schweins14 vornehmen zu können. Der Roboter 12 selbst ist von einer Schutzhülle 34 umgeben, um hygienischen Anforderungen zu genügen.

Die Bearbeitung des Schweins 14 mittels des Roboters 12 erfolgt während des Transports des Schweins 14, also während des Förderns durch den Arbeitsbereich 25. Um eine Positionsveränderung des Schweins 14 während der Bearbeitung und des Transports durch den Arbeitsbereich 25 auszuschließen, wodurch anderenfalls eine unpräzise Bearbeitung des Schweins 14 erfolgen würde, wird dieses auf einer Abstützung 36 mit seiner Rückseite 38 abgestützt. Dabei bewegt sich die Abstützung 36 synchron mit dem Förderer. Im Ausführungsbeispiel handelt es sich bei der Abstützung 36 um ein umlaufendes flächiges Band. Entsprechend der Darstellung in Fig. 1 können mehrere entsprechende Bänder bzw. Abstützungen 36, 40, 42 vorgesehen sein, um das Schwein 14 in zueinander beabstandeten Bereichen abzustützen.

Um beim Transport durch den Arbeitsbereich 25 eine insbesondere Drehbewegung des Schweins 14 zu der Abstützung 36, 40, 42 auszuschließen, ist des Weiteren erfindungsgemäß vorgesehen, dass an dem Schwein 14, und zwar dessen Bauchseite 24 ein Druckelement 44 in nachstehend beschriebener Weise abstützbar ist. Somit ist eine präzise Ausrichtung des Schweins 14 zu der Abstützung 36, 40, 42 während des Bearbeitens sichergestellt.

Während des Öffnens des Beckenknochens wird das Druckelement wie Bügel 44 von dem Schwein 14 zurückgezogen, um eine Behinderung für das Schneidmesser 28 auszuschließen. Des Weiteren wird beim Öffnen des Beckenknochens die Schutzhaube 30 zurückgezogen.

Während des Öffnens der Bauchdecke sowie des Brustbeins wird das Schwein 14 zeitweise von dem Druckelement 44 in Richtung der Abstützung 36, 40, 42 kraftbeaufschlagt, um eine eindeutige Positionierung zu gewährleisten, um folglich einen präzisen vertikalen Schnitt mittig durch das Brustbein zu ermöglichen.

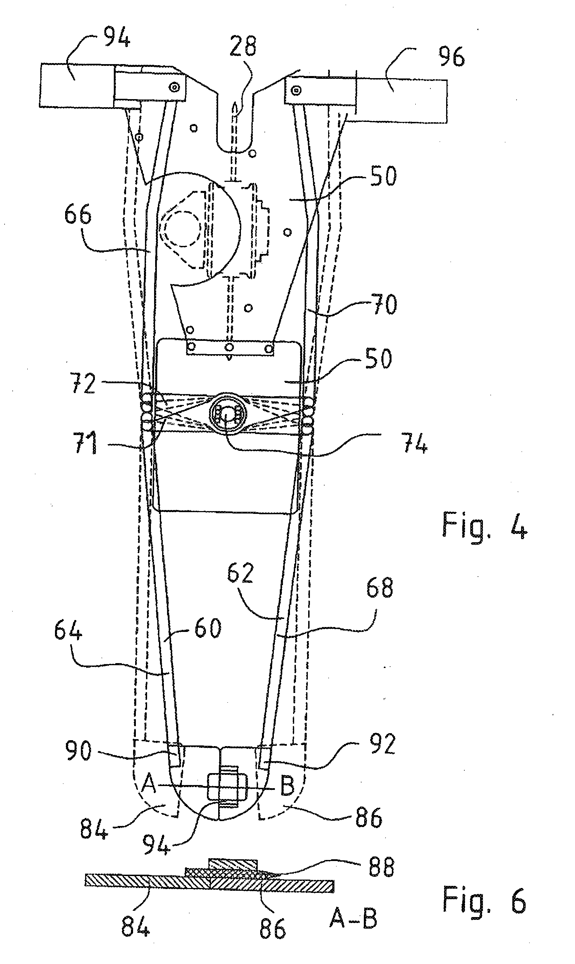

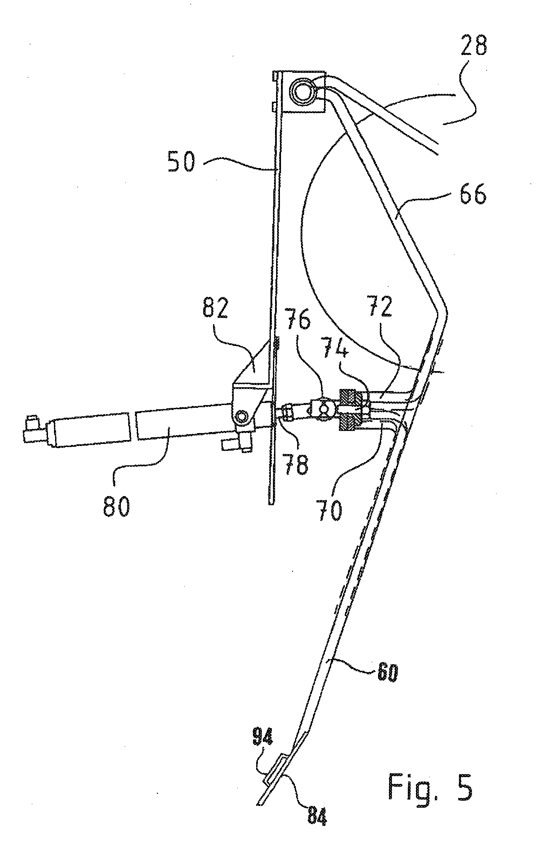

Als Druckelement 44 wird insbesondere ein solches verwendet, wie sich dieses prinzipiell aus den Fig. 4 bis 6 ergibt.

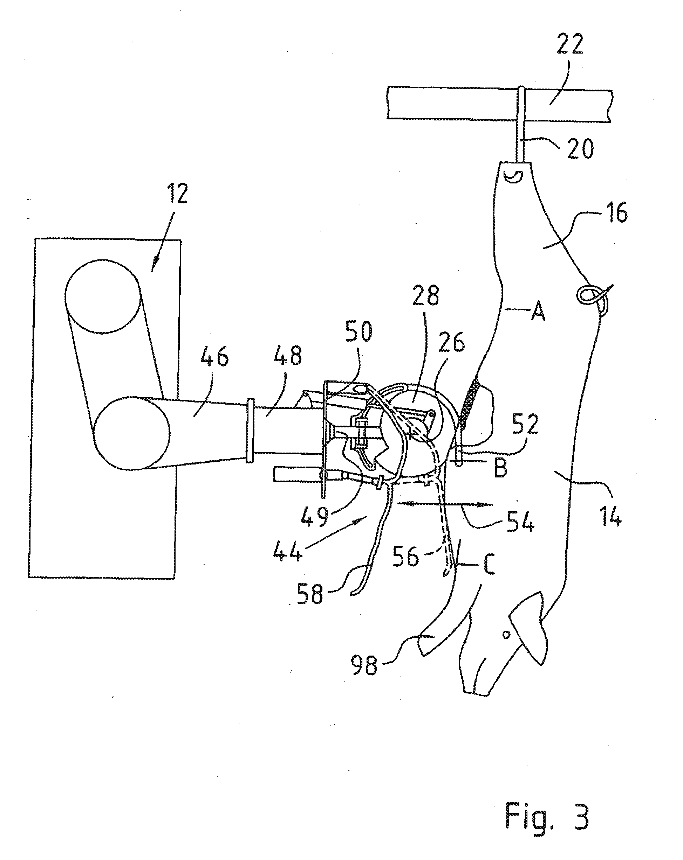

In Fig. 3 ist noch einmal rein prinzipiell ein an den Hinterbeinen 16 aufgehängtes und entlang einer Rohrbahn 22 förderbares Schlachttier wie Schwein 14 dargestellt, dessen Bauchdecke und Brustbein durchtrennt werden soll.

Um die Anatomie des Schweins 14 zu erfassen und in Abhängigkeit von dieser die Bearbeitung des Schweins 14 vorzunehmen, erfolgt - wie bereits erläutert - zuvor ein Scannen des Schweins 14, um sodann aufgrund der ermittelten digitalisierten Daten die Arbeiten durchzuführen, die mittels des Roboters 12 (Handhabungseinrichtung) vorgenommen werden. Hierzu geht von dem Roboterarm 46 ein Motor 48 aus, über den das Schneidmesser 28 antreibbar ist. Dieses selbst wird um die Achse 26 gedreht. Das Schneidmesser 28 geht von einer Halterung 49 aus, die mit einem plattenförmigen Basiselement 50 verbunden ist, das an dem Motorgehäuse bzw. dem Arm 46 des Roboters 12 befestigt ist. Das Basiselement 50 - vereinfacht als Platte bezeichnet - dient auch zur Befestigung des verschwenk- und spreizbaren Druckelementes 44, wie dies nachstehend beschrieben wird.

Des Weiteren ist ein Abweiser in Form eines Dorns 52 vorgesehen, der mit der Halterung 49 des Schneidmessers 28 verbunden und ggfs. in gewünschtem Umfang zu diesem verschwenkbar ist.

Das Druckelement 44 ist entsprechend der Darstellung in Fig. 3 zu dem Schwein 14 hin verschwenkbar (Pfeil 54), um unterhalb des Schneidmessers 28 an der Bauchseite des Schweins 14 anzuliegen (Position 56) oder aber hierzu beabstandet zu sein (Position 58), um in nachstehend beschriebener Weise die Möglichkeit zu bieten, dass das Schneidmesser 28 im erforderlichen Umfang in das Schwein 14 zum Durchtrennen des Brustbeins hineinfahren kann.

Eine bevorzugte Ausführungsform des Druckelementes 44 ergibt sich aus den Fig. 4 bis 6.

Das Druckelement 44 umfasst zwei Arme oder Bügel 60, 62, die eine S- bzw. Z-Geometrie aufweisen und somit jeweils zwei Außenschenkel 64, 66, 68, 70 sowie einen diese verbindenden Mittel- oder Querschenkel 71, 72 umfassen. Die Mittel- oder Querschenkel 71, 72 werden von einem eine Schwenkachse vorgebenden Zapfen 74 durchsetzt, der in einer Halterung 76 gesichert ist, die ihrerseits mit dem Kolben 78 eines Druckzylinders 80 verbunden ist. Dieser ist wiederum schwenkbar über eine Halterung 82 mit der Basisplatte 50 verbunden.

Des Weiteren weisen die unteren Außenschenkel 64, 68 plattenförmige Versteifungen 84, 86 auf, wobei von der Versteifung 84 ein Vorsprung wie ein Plattenelement 88 ausgeht, das bei zusammengefahrenen Bügeln 60, 62, also wenn die äußeren Enden 90, 92 einen minimalen Abstand zueinander aufweisen, in eine laschenförmige Aufnahme 94 der anderen Versteifung 86 eingreift, so dass die Bügel 60, 62 nicht gegeneinander verdrehbar sind.

Die oberen Außenschenkel 66, 70 sind ihrerseits mit Kolben von weiteren Druckzylindern 94, 96 verbunden, die von dem Basiselement 50 ausgehen. Durch die diesbezügliche Konstruktion besteht die Möglichkeit, die Bügel 60, 62 scherenartig zu verschwenken, d. h. die freien Enden 90, 92 aufeinanderzu zu bewegen (durchgezogene Darstellung) oder zueinander zu beabstanden (gestrichelte Darstellung in Fig. 4). Hierdurch ergibt sich die Möglichkeit, dass nach Eintauchen des Druckelementes 44 zwischen die Vorderbeine 98 des Schweins 14 erstere auseinander gespreizt werden können, damit das Durchtrennen des Brustbeins nicht behindert wird. Gleichzeitig ist eine in Abhängigkeit von der Anatomie erfolgende Ausrichtung des Schweins 14 zu der Abstützung 36, 40, 42 und damit zu dem Schneidmesser 28 sichergestellt mit der Folge, dass der gewünschte mittige und vertikal verlaufende Schnitt durchgeführt werden kann; denn die Bügel 60, 62 können positionsgenau in den Achselbereichen der Vorderbeine 98 festgelegt werden.

Erfindungsgemäß erfolgt ein Öffnen des Schweins 14 und ein Durchtrennen der Bauchdecke sowie des Brustbeins wie folgt. Zunächst wird bei zurückgezogenem Druckelement 44 (Prinzipstellung 58 in Fig. 3) der Beckenknochen durchtrennt, also eine Öffnung des Schweins 14 im Bereich der Hinterbeine 14 wird vorgenommen (Position A in Fig. 3). Sodann wird der Abweiser 52 in die Öffnung eingeführt. Hierbei befindet sich das Druckelement 44 weiterhin in der zurückgezogenen Position. Des Weiteren wird der Arm 46 des Roboters 12 derart verstellt, dass der Abweiser 52 - auch als Dorn bezeichnet - einen Druck auf die Innenseite der Bauchdecke ausübt oder drucklos entlang der Innenseite verstellt wird. Hierdurch ist sichergestellt, dass die Innereien des Schweins 14 zur Bauchdecke in einem Umfang beabstandet werden, dass beim Durchtrennen eine Verletzung unterbleibt.

Nach Eintauchen des Dorns 52 und Durchschneiden der Bauchdecke durch das Drehmesser 28 wird in Abhängigkeit vom Fortschritt des Durchtrennens sowie der zuvor durch Scannen erfassten Anatomie des Schweins 14 der Roboter 12 derart gesteuert, dass das Druckelement 44 in Richtung des Schweins 14 verschwenkt und somit dieses in Richtung der Abstützung 36, 40, 42 kraftbeaufschlagt wird. Hierdurch ist eine eindeutige Fixierung des Schweins 14 sichergestellt. Beim Trenn- bzw. Sägefortschritt verbleiben die Arme oder Bügel 64, 68 in ihrer verriegelten Stellung, d. h. der Abstand der freien Enden 90, 92 ist minimal. Hierdurch ergibt sich die Möglichkeit, dass unabhängig von der Stellung der Vorderbeine 98 des Schweins 14, wenn diese z. B. überkreuzt oder nahe am Körper anliegen, ein Eintauchen des Druckelementes 44 zwischen die Beine 98 erfolgen kann. Ebenfalls aufgrund der Scanndaten wird der Roboter 12 derart gesteuert, dass nach dem Eintauchen in Abhängigkeit von der Größe und Position der Vorderbeine 98 die Außenschenkel 64, 68 des Druckelementes 44 auseinander gefahren werden mit der Folge, dass die Vorderbeine 98 gespreizt werden. Gleichzeitig erfolgt eine Positionierung der Bügel 60, 62 bzw. Außenschenkel 64, 68 derart, dass eine gewünschte Ausrichtung des Schweins 14 zu der Abstützung 36, 40, 42 erfolgt, so dass der mittig und vertikal verlaufende Schnitt durch das Brustbein durchgeführt werden kann. Nachdem in etwa ein Drittel des Brustbeins (Bereich BC in Fig. 3) durchtrennt ist, ergibt sich eine Selbstführung des Schneidmessers 28, so dass das Druckelement 48 in die Ausgangsstellung (Stellung 58 in Fig. 3) zurückgezogen wird. Somit steht für das Schneidwerkzeug 28 eine größtmögliche Bearbeitungstiefe zur Verfügung. Dies ist erforderlich, da das Brustbein zum Hals hin in Richtung der Wirbelsäule verläuft. Gleichzeitig wird die Spreizung der Bügel 60, 62 in ihren vorderen Enden 90, 92 zurückgenommen, d. h. diese werden auf minimalen Abstand verstellt und somit verriegelt, um auszuschließen, dass die Vorderbeine 98 überdehnt werden. Sodann wird das Brustbein durch Verstellen des Schneidwerkzeugs 28 vollständig durchtrennt.

## Patentansprüche

1. Verfahren zum Öffnen von Bauchdecke und Brustbein eines in einer Bearbeitungsstation befindlichen Schlachttieres (14), wie Schwein, das in die Bearbeitungsstation (25) an seinen Hinterbeinen (16, 18) hängend entlang einer Förderbahn transportiert wird, wobei zum Öffnen des Schlachttieres dieses zuvor gescannt und hierdurch ermittelte digitalisierte Scanndaten einer Steuerung einer Handhabungseinrichtung (12) zugeführt werden, die das Öffnen mittels eines Schneidwerkzeuges umfassend ein um eine Drehachse (26) rotierendes Schneidmesser (28) mit zugeordnetem Abweiser (52) durchführt, wobei das Schlachttier während des Öffnens an einer Abstützung (38, 40, 42) in der Bearbeitungsstation zumindest zeitweise mittels eines mit dem Schneidwerkzeug mitbewegten Druckelements (44) gedrückt und durch dieses die Vorderbeine ggfs. auseinandergespreizt werden und wobei das Öffnen folgende Schritte umfasst,
- Einführen des Abweisers in eine im Bauchbereich im Bereich der Hinterbeine des Schlachttieres vorhandene Öffnung,
- Positionieren des Abweisers auf der Innenseite der Bauchdecke und
- Durchtrennen der Bauchdecke sowie des Brustbeins bei vertikaler abwärts gerichteter Bewegung des Schneidwerkzeugs,
**dadurch gekennzeichnet,**
**dass** ein Druckelement (44) verwendet wird, das zwei zueinander verstellbare Bügelelemente (60, 62) aufweist, die derart gesteuert werden, dass das Druckelement beim Positionieren des Abweisers (52) an der Innenseite der Bauchdecke zu dem Schlachttier (14) beabstandet wird, dass das Druckelement anschließend an das Schlachttier angelegt und beim weiteren Öffnen auf der Bauchseite (24) des Schlachttieres entlang gleitet, wobei die Bügelelemente in ihren den Vorderbeinen zugewandten ersten Enden minimal möglichen Abstand während des Eintauchens zwischen den Vorderbeinen aufweisen und anschließend in Abhängigkeit von der durch das Scannen erfassten Anatomie des Schlachttieres die Vorderbeine (98) gespreizt werden, ohne dass eine Überdehnung erfolgt, und dass das Abheben des Druckelementes von dem Schlachttier dann erfolgt, nachdem das Brustbein über eine vorgegebene Länge durchtrennt ist.

2. Verfahren nach Anspruch 1,
**dadurch gekennzeichnet,**
**dass** das Anlegen des Druckelementes (44) an das Schlachttier (14) in einem Abstand von der Eintrittsöffnung erfolgt, der in etwa ¼ bis ⅓ vom Gesamtabstand zwischen Eintrittsöffnung und Brustbeinanfang beträgt.

3. Verfahren nach Anspruch 1 oder 2,
**dadurch gekennzeichnet,**
**dass** das Druckelement (44) von dem Schlachttier (14) abgehoben wird, nachdem etwa ¼ bis ½, vorzugsweise ⅓ des Brustbeins durchtrennt ist.

4. Verfahren nach zumindest einem der vorhergehenden Ansprüche,
**dadurch gekennzeichnet,**
**dass** die Eintrittsöffnung durch Öffnen des Beckenknochens gebildet wird.

5. Verfahren nach Anspruch 4,
**dadurch gekennzeichnet,**
**dass** das Öffnen des Beckenknochens mit demselben Schneidwerkzeug (28) durchgeführt wird.

6. Verfahren nach zumindest einem der vorhergehenden Ansprüche,
**dadurch gekennzeichnet,**
**dass** das Öffnen der Bauchdecke und des Brustbeins während des Förderns des Schlachttiers (14) bei synchron mitbewegter Abstützung (38, 40, 42) durchgeführt wird.

7. Verfahren nach zumindest einem der vorhergehenden Ansprüche,
**dadurch gekennzeichnet,**
**dass** die Bügelelemente (60, 62) des Druckelementes (44) scherenförmig zueinander verschwenkt und über eine in etwa im Mittenbereich verlaufende Schwenkachse verbunden werden.

8. Verfahren nach zumindest einem der vorhergehenden Ansprüche,
**dadurch gekennzeichnet,**
**dass** als Bügelelement (60, 62) ein solches verwendet wird, dass eine Z- bzw. S-förmige Geometrie mit Außen- und Mittelschenkeln (64, 66, 68, 70; 71, 72) aufweist, wobei der Mittelschenkel von der Schwenkachse durchsetzt wird.

9. Verfahren nach zumindest einem der vorhergehenden Ansprüche,
**dadurch gekennzeichnet,**
**dass** der förderbandseitig verlaufende Außenschenkel (66, 70) des Bügelelementes (60, 62) insbesondere in dessen freiem Endbereich mit einem Zylinder wie Druckluftzylinder (94, 96) verbunden wird, über den das Bügelelement entlang der Förderrichtung verschwenkt wird.

10. Verfahren nach Anspruch 9,
**dadurch gekennzeichnet,**
**dass** der Zylinder (94, 96) mit einem mit der Handhabungseinrichtung (12) mittelbar oder unmittelbar verbundenen plattenförmigen Basiselement (50) verbunden wird, das Halterung für das Schneidwerkzeug ist.

11. Verfahren nach Anspruch 10,
**dadurch gekennzeichnet,**
**dass** die von der Schwenkachse durchsetzte Verbindung der Bügelelemente (60, 62) mit einem weiteren Zylinder (80) verbunden wird, der von dem Basiselement (50) ausgeht und mittels dessen das Druckelement (44) zu dem Basiselement verstellt wird.

12. Verfahren nach zumindest einem der vorhergehenden Ansprüche,
**dadurch gekennzeichnet,**
**dass** die Bügelelemente (60, 62) während oder nach dem Abheben von dem Schlachttier (14) mit ihren zum Förderer fern liegenden ersten Enden (90, 92) in minimal möglichen Abstand zueinander verschwenkt werden.

13. Verfahren nach zumindest einem der vorhergehenden Ansprüche,
**dadurch gekennzeichnet,**
**dass** der Abweiser (52) während des Durchtrennens der Bauchdecke drucklos entlang der Innenseite der Bauchdecke geführt wird.

## Claims

1. Method for opening the abdominal wall and breast bone of a slaughtered animal (14), such as a pig, which is situated in a processing station and transported hanging by its hind legs (16, 18) alongside a conveyor track into the processing station (25), wherein, before the slaughtered animal is opened, it is scanned and the digitized scan data determined hereby are fed to a control of a handling device (12) which operates the opening by means of a cutting tool comprising a cutting knife (28) rotating about an axis of rotation (26) with an associated deflector (52), wherein, during the opening, the slaughtered animal is, at least temporarily, pressed to a support (38, 40, 42) in the processing station by means of a pressure element (44) that is synchronously moved together with the cutting tool, and by means of which the forelegs are spread, if necessary, and wherein the opening comprises the following steps:
- inserting the deflector into an opening in the abdominal region in the area of the hind legs of the slaughtered animal,
- positioning the deflector on the inside of the abdominal wall and
- transecting the abdominal wall and the breast bone with a vertical downward movement of the cutting tool,
**characterized in that**
a pressure element (44) is used featuring two bow elements (60, 62) adjustable in relation to each other which are controlled in such a way that the pressure element is positioned at a distance to the slaughtered animal (14) when the deflector (52) is positioned on the inside of the abdominal wall,
the pressure element is subsequently laid onto the slaughtered animal and glides alongside the abdominal side (24) of the slaughtered animal during the further opening, wherein the first ends of the bow elements facing the forelegs have the smallest possible distance during the immerging between the forelegs and, subsequently, depending on the anatomy of the slaughtered animal which was determined by the scanning beforehand, the forelegs (98) are spread, without causing an undue stretching, and the pressure element is removed from the slaughtered animal after the breast bone has been transected over a predetermined length.

2. Method according to claim 1,
**characterized in that**
the pressure element (44) is laid onto the slaughtered animal (14) at a distance from the entry opening which is approx. ¼ to ⅓ of the total distance between entry opening and the beginning of the breast bone.

3. Method according to claim 1 or 2,
**characterized in that**
the pressure element (44) is removed from the slaughtered animal (14) after approx. ¼ to ½, preferably ⅓ of the breast bone has been transected.

4. Method according to at least one of the previous claims,
**characterized in that**
the entry opening is formed by opening the pelvic bone.

5. Method according to claim 4,
**characterized in that**
the opening of the pelvic bone is carried out with the same cutting tool (28).

6. Method according to at least one of the previous claims,
**characterized in that**
the opening of the abdominal wall and the breast bone is carried out while the slaughtered animal (14) is conveyed with the support (38, 40, 42) being synchronously moved.

7. Method according to at least one of the previous claims,
**characterized in that**
the bow elements (60, 62) of the pressure element (44) are swiveled in a scissor-like manner in relation to each other and are connected via a swivel axis which approximately passes through the center region.

8. Method according to at least one of the previous claims,
**characterized in that**
a bow element (60,62) is used featuring a Z- or S-shaped geometry, with outer and center limbs (64, 66, 68, 70; 71, 72), wherein the swivel axis passes through the center limb.

9. Method according to at least one of the previous claims,
**characterized in that**
the outer limb (66, 70) of the bow element (60, 62) running on the side of the of the conveyor belt is, in particular at the free end section of the bow element, connected with a cylinder, such as a compressed air cylinder (94, 96), via which the bow element is swiveled alongside the conveying direction.

10. Method according to claim 9,
**characterized in that**
the cylinder (94, 96) is connected to a plate-shaped base element (50) which is directly or indirectly connected to the handling device (12), and which serves as a mounting for the cutting tool.

11. Method according to claim 10,
**characterized in that**
the joint of the bow elements (60, 62), through which the swivel axis passes, is connected to a further cylinder (80) emanating from the base element (50), and by which the pressure element (44) is adjusted in relation to the base element.

12. Method according to at least one of the previous claims,
**characterized in that**
the free first ends (90, 92) of the bow elements (60, 62) that are distant from the conveyer are swiveled in relation to each other at the smallest possible distance while or after the bow elements are removed from the slaughtered animal (14).

13. Method according to one of the previous claims,
**characterized in that**
during the transaction of the abdominal wall, the deflector (52) is guided alongside the inside of the abdominal wall without exerting pressure.

## Revendications

1. Procédé destiné à ouvrir la paroi abdominale et le sternum d'un animal de boucherie (14), tel qu'un porc, qui est placé dans une station de traitement et transporté dans la station de traitement (25) le long d'un convoyeur aérien en étant suspendu par ses pattes postérieures (16, 18), sachant que pour l'ouvrir, l'animal de boucherie est tout d'abord scanné et que les données de scannage numérisées par ce moyen sont entrées dans une commande d'un manipulateur (12), lequel effectue l'ouverture au moyen d'un outil de coupe comprenant une lame de coupe rotative (28) avec déviateur (52) associé et tournant autour d'un axe de rotation (26), que pendant l'ouverture, l'animal de boucherie est pressé au moins par intermittence sur un support (38, 40, 42) dans la station de traitement au moyen d'un élément presseur (44) solidaire de l'outil de coupe et par lequel les pattes antérieures sont le cas échéant écartées, et que l'ouverture comprend les étapes suivantes,
- introduction du déviateur dans un orifice présent dans la zone abdominale dans la région des pattes postérieures de l'animal de boucherie,
- positionnement du déviateur sur la face intérieure de la paroi abdominale et
- sectionnement de la paroi abdominale ainsi que du sternum par un mouvement vertical descendant de l'outil de coupe,
**caractérisé en ce**
**qu'**est utilisé un élément presseur (44) qui présente deux éléments arqués (60, 62) réglables l'un par rapport à l'autre et qui sont actionnés de manière telle que, lors du positionnement du déviateur (52) sur la face intérieure de la paroi abdominale, l'élément presseur est mis à distance de l'animal de boucherie (14), que l'élément presseur est ensuite appliqué sur l'animal de boucherie et, en poursuivant l'ouverture, glisse le long du côté abdominal (24) de l'animal de boucherie, sachant que les éléments arqués présentent à leurs premières extrémités orientées vers les pattes antérieures le plus petit écartement possible lors de l'insertion entre les pattes antérieures, puis qu'en fonction de l'anatomie de l'animal de boucherie saisie par le scannage, les pattes antérieures (98) sont écartées sans qu'ait lieu une hyperextension, et que le retrait de l'élément presseur de l'animal de boucherie est effectué après que le sternum a été sectionné sur une longueur prédéfinie.

2. Procédé selon la revendication 1,
**caractérisé en ce**
**que** l'application de l'élément presseur (44) sur l'animal de boucherie (14) a lieu à une distance de l'orifice d'entrée qui est approximativement comprise entre 1/4 et 1/3 de la distance totale entre l'orifice d'entrée et le début du sternum.

3. Procédé selon la revendication 1 ou 2,
**caractérisé en ce**
**que** l'élément presseur (44) est retiré de l'animal de boucherie (14) après qu'approximativement 1/4 à 1/2, de préférence 1/3 du sternum a été sectionné.

4. Procédé selon au moins une des revendications précédentes,
**caractérisé en ce**
**que** l'orifice d'entrée est formé par ouverture de l'os pelvien.

5. Procédé selon la revendication 4,
**caractérisé en ce**
**que** l'ouverture de l'os pelvien est effectuée avec le même outil de coupe (28).

6. Procédé selon au moins une des revendications précédentes,
**caractérisé en ce**
**que** l'ouverture de la paroi abdominale et du sternum est effectuée pendant le transport de l'animal de boucherie (14), le support (38, 40, 42) étant entraîné de manière synchrone.

7. Procédé selon au moins une des revendications précédentes,
**caractérisé en ce**
**que** les éléments arqués (60, 62) de l'élément presseur (44) pivotent l'un par rapport à l'autre à la manière de ciseaux et sont reliés par un axe de pivotement s'étendant approximativement dans la zone médiane.

8. Procédé selon au moins une des revendications précédentes,
**caractérisé en ce**
**qu'**est utilisé un élément arqué (60, 62) qui présente une géométrie en forme de Z ou de S avec branches extérieure et médiane (64, 66, 68, 70 ; 71, 72), sachant que la branche médiane est traversée par l'axe de pivotement.

9. Procédé selon au moins une des revendications précédentes,
**caractérisé en ce**
**que** la branche extérieure (66, 70) de l'élément arqué (60, 62) s'étendant du côté du convoyeur à bande est reliée en particulier dans la zone de son extrémité libre à un vérin, tel qu'un vérin pneumatique (94, 96), au moyen duquel l'élément arqué est pivoté le long de la direction de convoyage.

10. Procédé selon la revendication 9,
**caractérisé en ce**
**que** le vérin (94, 96) est relié à un élément de base (50) en forme de plaque, qui est le support de l'outil de coupe et lui-même relié indirectement ou directement au manipulateur (12).

11. Procédé selon la revendication 10,
**caractérisé en ce**
**que** la pièce de jonction des éléments arqués (60, 62) traversée par l'axe de pivotement est reliée à un autre vérin (80) qui part de l'élément de base (50) et au moyen duquel l'élément presseur (44) est déplacé par rapport à l'élément de base.

12. Procédé selon au moins une des revendications précédentes,
**caractérisé en ce**
**que** pendant ou après leur retrait de l'animal de boucherie (14), les éléments arqués (60, 62) sont pivotés l'un par rapport à l'autre de sorte que leurs premières extrémités (90, 92) éloignées du convoyeur présentent le plus petit écartement possible.

13. Procédé selon au moins une des revendications précédentes,
**caractérisé en ce**
**que** pendant le sectionnement de la paroi abdominale, le déviateur (52) est guidé sans pression le long de la face intérieure de la paroi abdominale.
